# EUROPEAN PATENT SPECIFICATION

(11) **EP 2 224 375 B1**
(45) Date of publication and mention of the grant of the patent: **14.11.2018**
(21) Application number: 09002623.8
(22) Date of filing: 25.02.2009
(51) Int. Cl.: G06K 19/07, G06K 7/00

(54) **Power supply for a system including chip card connected to a host device**
Leistungsversorgung für ein System mit einer an einer Hostvorrichtung angeschlossenen Chipkarte
Alimentation pour système incluant une carte à puce connectée à un dispositif hôte

(43) Date of publication of application: 01.09.2010
(73) Proprietor: Vodafone Holding GmbH, 40213 Düsseldorf (DE)
(72) Inventor: Hoeksel, Sebastiaan, 6229 VN Maastricht (NL); Koraichi, Najib, 6333 CT Schimmert (NL); Waters, Patrick H, Redlynch Salisbury SP5 2HN (GB)
(74) Representative: Jostarndt Patentanwalts-AG

(56) References cited:
- WO-A-2006/059213
- WO-A-2007/122439
- US-A1- 2004 058 705
- US-A1- 2008 319 912

## Description

### Technical Field

The invention relates to the power supply for a system comprising a chip card connected to a host device and an add-on module which can be coupled to the chip card to execute a transaction, wherein the chip card can be supplied with power by a first power supply means of the host device.

### Background of the invention

Portable devices, such as mobile communication devices, can be provided with add-on modules that complement the original functionalities of the portable device. An example of such an add-on module is a component for contactless communication allowing executing contactless transactions with a terminal. For instance, the transactions may be financial transactions allowing making electronic payments. Further examples are electronic ticketing transactions in which an electronic ticket, such as a ticket for public transportation or a ticket to an event, is provided and validated by the terminal.

Contactless communication in scenarios as those described before may be based on a contactless communication technology such as NFC (Near Field Communication). The NFC technology is specified in ISO 18092 and 21481, ECMA 340.352 and 356, and ETSI TS 102 190and allows for contactless communication between devices over a short distance of a few centimetres. NFC enabled devices comprise an NFC controller coupled to a secure element and an antenna, which is configured as magnetic loop antenna operating at a frequency of 13.56 MHz. The NFC controller controls the antenna on a physical level. On an application level, the execution of transactions is controlled by NFC applications which are executed in the secure element. Since the execution of transactions, such as financial transactions or ticketing transactions, usually involves sensitive data, the secure element provides a security architecture preventing unauthorized third parties from accessing the sensitive data.

Mobile communication devices are usually used in connection with secure chip cards providing functionality for identifying and authentication a mobile user to the mobile communication network. In case of GSM networks (GSM: Global System for Mobile Communications) the chip cards are referred to as SIM cards (SIM: Subscriber Identity Module). In particular for mobile communication devices, it has already been proposed to implement the secure element into the already existing chip card used in connection with the device and to couple the chip card with an add-on module including the contactless interface. This allows using the secure infrastructure of the existing chip card for protecting sensitive data used in contactless transactions.

When executing contactless transactions, usually only the add-on device and the chip card are involved, while the mobile communication device itself does not have an active role. However, it is usually required that the mobile communication device is turned on, since it supplies power to the chip card and it may also supply power to the add-on device. Hence, it is usually not possible to execute transactions, when the mobile communication device is turned off.

US2008/0319912A1 relates to a token for financial transactions. In one embodiment, the token includes an assembly, particularly a cell phone, to which a financial transaction card can be connected via a slot. The financial transaction card comprises an embedded processor and memory and an antenna and/or transceiver for contactlessly executing financial transactions with point-of-sale terminals. Moreover, the card comprises an interface for connecting to an ex ternal power source and an on-board energy storage device. Via the interface, an external power signal can power the card's internal electronic components and charge the energy storage device. If the external power source becomes insufficient to power the card's internal electronics, the card can switch to the internal energy storage device to supplement or replace the energy dreived from the external power source.

WO2006/059213A1 describes a cellular telephone suitable for use as a pay phone. The telephone comprises a secure memory including an operating purse for retaining a credit value available for a usage session. Via an internal wireless interfacing means the telephone can be coupled to a separate bulk storage purse. From the bulk storage purse a credit value can be transferred to the operating purse of the telephone, and, at the end of a usage session, credit value remaining in the operating purse can be returned to the separate bulk storage purse. In one embodiment, the separate bulk storage purse does not have a power supply or battery within it and can be powered from the telephone. In another embodiment, the internal coupling circuit of the telephone and the separate bulk storage purse are co-operating via the wireless interfacing means in which instance additional power supply means, such as a battery, power the circuitry of the separate bulk storage purse.

US2004/0058705A1 describes a docking module for a cellular telephone which allows the cellular telephone to be used as a point-of-sale system to accept payment via credit card and the like. The docking module contains an IC-card reader and an internal battery which can be recharged via an external power connector to the cellular phone. Via the telephone information for verifying payment means is exchanged with a validation computer system. The telephone and the docking module are each powered from their own internal battery sources.

WO2007/122439A1 relates to a system for controlling near field communication for a mobile device. The system includes a mobile phone having a NFC component connected to a battery interface of the mobile phone. A battery control circuit provides operating conditions in accordance with the charging condition of the battery. The battery control circuit can selectively power each component; especially the NFC components. In particular, in the battery low or power off conditions, the telephone with its user interface and the network access component are not powered, but the power management and a base-band and firmware processor for providing means to control the operation of the NFC components.

### Description of the invention

It is an object of the present invention to allow for executing transactions independent of status of the host device in a system of the type described before.

The object is achieved by a system according to claim 1. Embodiments of the invention are given in the dependent claims.

According to an aspect of the invention, a system is suggested that comprises a chip card connected to a host device via a first interface and an add-on module which can be coupled to the chip card to execute the transaction. The chip card can be supplied with power by a first power supply means of the host device. The system further comprises at least one second power supply means and the chip card can be supplied with power by the second power supply means, when a transaction is executed. The host device is a mobile communication device and the chip card is a SIM card.

The invention involves the idea to provide a further power supply means in addition to the power supply means of the host device. The additional power supply means is used for supplying power to the chip card during a transaction executed using an add-on module in connection with the chip card. In particular, this allows executing transactions, when the host device is turned off and the chip card cannot be supplied with power by the power supply means of the host device.

The add-on module comprises a communication means for contactless communication with a terminal, the chip card including an element providing information used for executing transactions with the terminal. In particular, the chip card may comprise a secure element controlling the transaction on the application level, while the add-on module provides a controller for controlling the data transfer between the add-on module and the terminal. The communication means included in the add-on module may comprise an antenna and a controller connected to the antenna. The contactless communication may be based on the NFC technology or on another similar contactless communication technology.

At least in a passive communication mode the add-on module may be supplied with power by a radio frequency field generated by the terminal in order to establish the contactless communication channel with the add-on module. Thus, the add-on module does not have to be supplied with power from an additional power source. However, it is likewise possible that the add-on module is supplied with power by the second power supply means, when the transaction is executed. This
enables the add-on module to actively generate a radio frequency field in order to communicate with the terminal in an active communication mode. Further on, the add-on module may also be supplied with power when operated in a passive communication mode. This allows for executing transactions, when the radio frequency field generated by the terminal is weaker. In particular, the strength of radio frequency field decreases with the distance to the terminal so that an additional power supply of the add-on module allows for an increased range of the contactless communication.

Furthermore, the current that can be supplied to the chip card and/or to the add-on module via the host device may be limited according to the specification of the relevant interfaces. Here, the second power supply means allows for supplying a higher current to the add-on module and/or to the chip card, when a transaction is executed.

The second power supply means may be included in the chip card or in the add-on module. If the second power supply means is integrated into the add-on module, the add-on module supplies power to the chip card, when a transaction is executed. If the second power supply means is included in the chip card, the chip card may provide power to the add-on module during a transaction. Furthermore, the chip card and the add-on module may comprise a power supply means. In this embodiment, the power supply means included in the chip card may supply power to the chip card, when a transaction is executed, and the power supply means integrated into the add-on module may provide power to the add-on module during a transaction.

Preferably, the second power supply means comprises a rechargeable battery and the battery can be charged by the first power supply means. It is an advantage of this embodiment that second power supply means can be recharged by means of the power supply means of the host device and does not have to be replaced in case of exhaustion.

In one embodiment of the invention, in a first operation mode, the chip card is supplied with power by the first power supply means and, in a second operation mode, the chip card is supplied with power by the second power supply means. Preferably, the second operation mode is used, if a power connection between the first power supply means and the chip card and/or the add-on module is disconnected when a transaction is executed. The first operation mode may be used, when the chip card receives power from first power supply means of the host device, while a transaction is executed. However, it is also possible to use the second operation mode, when a transaction is executed and the first power supply means is able to provide power to the chip card. This prevents that the power supply of the chip card is interrupted or disconnected during the transaction so that the transaction cannot be completed. When the first power supply means is able to provide power to the chip card, the power connection between the chip card and the first power supply means is preferably disconnected.

In one embodiment of the invention, the add-on module is connected between the host device and the chip card. It is an advantage of this embodiment that the existing first interface between the chip card and the host device can be used for connecting the add-on module to the chip card. Furthermore, in this embodiment the second power supply means allows for supplying the required supply current to the add-on module and the chip card, while the current that can be provided by the host device via the first interface is usually limited.

In alternative embodiments, the add-on module is connected to the host device via a second interface and/or is integrated into the host device. The second interface may be an external interface of the host device and the add-on module is connected to the chip card via the external interface. When the add-module is integrated into the host device, an internal interface of the host device is used to connect the add-on module to the chip card.

In a further embodiment of the invention, the add-on module and the chip card can be coupled wirelessly. In this embodiment, the add-on module and the chip card communicate wirelessly with each other. Further on, the add-on module may supply power to the chip card inductively, when the second power supply means is integrated into the add-on module. If the second power supply means is included in the chip card, the chip card may provide power to the add-on module inductively.

The host device is a mobile communication device and the chip card is a SIM card. The term SIM card as used herein refers to a chip card that is used in connection with a mobile communication device and offers identification and/or authentication services to a mobile communication network. The chip card may comprise a SIM application according to the GSM standard, a USIM application according to the UMTS standard (USIM: Universal Subscriber Identity Module; UMTS: Universal Mobile Telecommunications System) or corresponding applications providing authentication and/or identification functions in connection with a mobile communication network.

The aforementioned and other aspects of the invention will also be apparent from and elucidated with reference to the embodiments described hereinafter making reference to the drawings. A system comprising a SIM-card connected to a mobile communication device, according to the present invention is defined in claim 1. Dependent claims 2-8 define preferred embodiments.

### Brief description of the drawings

Reference will be made by way of example to the accompanying drawings in which
- Fig. 1: shows a system including a host device, a chip card connected to the host device and an add-on module in a first configuration,
- Fig. 2: shows a system Including a host device, a chip card connected to the host device and an add-on module in a second configuration,
- Fig. 3: shows a system including a host device, a chip card connected to the host device and an add-on module in a third configuration and
- Fig. 4: shows a system including a host device, a chip card connected to the host device and an add-on module in a fourth configuration.

### Detailed description of embodiments of the invention

The figures show different configurations of a system including a host device 101 of a user and an add-on module 102 that is used in connection with a chip card 103 which can be inserted into the host device 101.

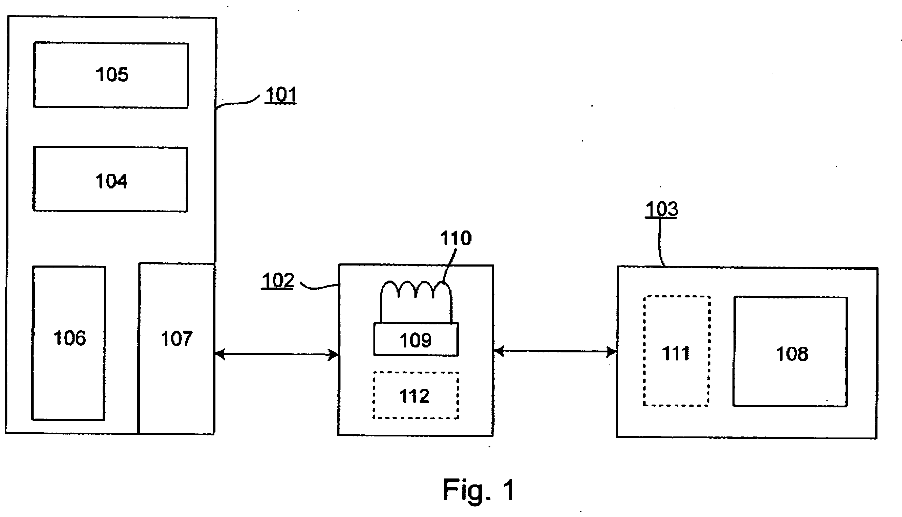

The host device 101 may be a portable device, particularly a mobile communication device, such as, for example, a cellular phone, a PDA (Personal Data Assistant), a laptop computer or the like. It comprises a control unit 104 for controlling the operation of the host device 101, and the control unit 104 may comprise a programmable microprocessor for running programs controlling functionalities of the host device 101. In addition, the host device 101 comprises a user interface 105 allowing a user to interact with the host device 101. The user interface 105 may comprise a display unit which may be configured as a monitor, and the user interface 105 may comprise an input unit which may be configured as a keypad, for example. By means of a radio module, which is not shown in figure 1, the host device 101 may be connected wirelessly to a mobile communication network. For instance, the mobile communication network may be a GSM or a UMTS network. The aforementioned components and further components of the host device 101 are supplied with power by a power source 106, which may be a battery, preferably a rechargeable battery, such as, for example, a lithium-ion battery.

The chip card 103 is configured according to a standard chip card format and can be inserted into a card reader unit 107 of the host device 101, which is suitable for receiving chip cards of the respective standard format. The chip card 103 comprises a microcontroller 108 including a microprocessor for executing programs controlling functions of the chip card 103. The microcontroller 108 further comprises a memory unit for storing programs that can be executed in the microprocessor and further data used in the operation of the chip card 103. The microcontroller 108 provides a secure environment for the execution of applications and the storage of data. In particular, unauthorized access to data and processes is prevented due to the hardware design of the microcontroller 108 and due to cryptographic mechanisms used for managing data in the microcontroller 108. Moreover, the microcontroller 108 is integrated into a secure hardware environment provided by the chip card 103, which is physically protected against manipulations, such as power analysis, reverse engineering etc.

When the chip card 103 is inserted into the card reader unit 107 of the host device 101 and when the host device 101 is turned on, the chip card 103 can be supplied with power by means of the power source 106 of the host device 101. For this purpose, the chip card 103 comprises a terminal that can be connected to the power source 106 of the host device 101 through the card reader unit 107. Further terminals are provided for exchanging data with the host device 101 and receiving control signals from the host device 101. Usually, the terminals of a chip card 103 are referred to as C1 to C8 and the terminal C6 designated as Vcc is provided for supplying power to the chip card 103.

In particular, via the card reader unit 107 a supply voltage having a predetermined value is supplied to the power terminal Vcc. In one embodiment, the supply voltage has a value that corresponds to one class specified in the ISO specification 7816-3. According to this specification, three classes are provided: Class A provides a supply voltage of 5 V, class B provides a supply voltage of 3 V, and class C corresponds to a supply voltage of 1.8 V. The allowed voltage tolerance is 10% in each class. A supply current is likewise received via the power terminal Vcc and may be limited to a predetermined value according to specification of the interface between the chip card 102 and the host device 101.

Preferably, the chip card 103 is used in connection with the utilisation of a host device 101 in a mobile communication network. In particular, the chip card 103 may comprise an application, which provides services for secure identification and authentication of the user to the mobile communication network. If the mobile communication network is a GSM network, the chip card 103 is configured as a SIM card according to the GSM standard comprising a SIM application providing the identification and authentication services. If the mobile communication network is a UMTS network, the chip card 103 is configured as a UICC (Universal Integrated Circuit Card) comprising a USIM application providing the identification and authentication services to the mobile communication network. However, herein the term SIM card is used for any chip card 103 comprising the aforementioned functionalities. Thus, the term SIM card, as used herein, is to be understood as including chip cards 103 comprising a SIM but also as including chip cards 103 comprising USIM applications or corresponding applications providing authentication and/or identification functions in connection with a mobile communication network.

When inserted into the card reader unit 107 of the host device 101, the chip card 103 can be connected to the add-on module 102 that provides functionalities for contactless communication with a terminal that is not depicted in the figures. The add-on module 102 comprises a microcontroller 109 and an antenna 110 coupled to the microcontroller 109. The antenna 110 is configured to receive radio signals from the terminal and/or to transmit radio signals that can be received in the terminal. The microcontroller 109 controls the communication between the add-on module 102 and the terminal on the physical layer. This means that the microcontroller 109 sets up the operation mode of add-on module 102 and controls the exchange of the radio signal between the antenna 110 and the terminal.

Further on, the microcontroller 109 communicates with applications that control the data exchange between the add-on module 102 and the terminal on the application level. In particular, the microcontroller 109 forwards data messages received by means of the antenna 110 to the application concerned and controls the antenna 110 to transmit data messages received from this application to the terminal. The applications are provided by the chip card 103 and are executed in the microcontroller 108 of the chip card 103. The communication between the microcontroller 109 and the applications is preferably secured in a manner known to a person skilled in the art. For instance, an encryption mechanism is used for encrypting message exchanged between the microcontroller 109 and the applications.

In particular, the add-on module 102 interacts with a terminal in order to execute transactions with the terminal. The transactions may be electronic payment transactions or ticketing transactions, for example. As described before, on the application level, the transactions are controlled by one or more applications which particularly provide the data necessary for executing the transactions. The data may include information for identifying the user and further data used in the transactions, such as funds for making electronic payments or electronic tickets. For each type of transaction, one corresponding application may be provided. Furthermore, the application may be configured to interact with certain terminals, such as, for example terminals operated by a certain service provider. By integrating the applications into the chip card 103, they are embedded into the security architecture provided by the chip card 103, so that unauthorized access to sensitive information provided by the applications is prevented.

The contactless communication is based on a short range communication technology, which allows for exchanging data between the add-on module 102 and the terminal over a short range between several centimetres and several ten centimetres. In one embodiment, the communication is based on at least one of the specifications ISO 14443 Type A, ISO 14443 Type B, ISO 18092 and ISO 15693. In particular, the NFC technology may be used, which implements the aforementioned specifications. In this embodiment, the antenna 110 is configured as a magnetic loop antenna operating at a carrier frequency of 13.56 MHz and a radio signal can be exchanged over a distance of a few centimetres. Moreover, the add-on module 102 can be operated in several different modes, which correspond to the different tag types defined in the NFC specifications and which differ in the communication protocols used and in the data transmission rates, for example. Type 1 and type 2 tags are based on the specification ISO 14443 type A, type 3 tags use the specification ISO 18092 and type 4 tags are compatible to the specifications ISO 14443 type A and type B.

Further on, the add-on module 102 can be operated in an active communication and in a passive communication mode. In the active communication mode the add-on module 102 and the terminal each generate a radio frequency (RF) field at the carrier frequency in order to send data to the communication partner. In the passive communication mode only one communication partner, which is called initiator, generates an RF field at the carrier frequency that is used by the initiator to transmit data to the other communication partner which is called target. The target uses load modulation for transmitting data to the initiator. This means that the current flowing through the antenna 110 of the target is modulated using a controllable resistor. In the passive communication mode, the add-on module 102 may be the initiator of the communication as well as the target.

The connection between the chip card 103 and the add-on module 102 can be realised in several configurations. Figures 1 to 3 schematically depict exemplary configurations in which a wired connection exists between the chip card 103 and the add-on module 102.

In the configuration schematically depicted in figure 1, the add-on module 102 is connected between the host device 101 and the chip card 103. For this purpose, the add-on module 102 comprises a contacting element which has essentially the same shape as the chip card 103 and which can be inserted into the card reader unit 107 of the host device 101 instead of the chip card 103. The contact element is connected to a circuit board comprising the microcontroller 109 and the antenna 110 of the add-on module 102. Further on, the circuit board comprises a card reader unit for receiving the chip card 103, which is connected to the card reader unit 107 of the host device 101 via the circuit board and the contacting element. The circuit board may be dimensioned such that it can be inserted in the housing of the host device 101.

In a further embodiment, the add-on module 102 comprises a thin contacting element that can be inserted into the card reader unit 107 of the host device 101 between the terminals of the card reader unit 107 and the chip card 103. On one surface, the contacting element comprises contact elements for contacting the terminals of the card reader unit 107 of the host device 101 and, on the opposite surface, contact elements are arranged for contacting the terminals of the chip card 103. The contacting element is again connected to a circuit board comprising the microcontroller 109 and the antenna 110 of the add-on module 102. Moreover, the contact elements on one surface of the contacting element are connected to the respective contact elements on the opposite surface via the circuit board such that the chip card 103 is connected to the card reader unit 107 of the host device 101 via the add-on module 102. As an alternative, the circuitry including the microcontroller 109 and the antenna 110 may be integrated into a chip that is mounted on the contacting element, preferably in marginal position. In this embodiment, the chip card 103 is provided with a cutting for accepting the chip.

When the add-on module 102 is connected between the host device 101 and the chip card 103, it can be supplied with power by the power source 106 of the host device via the power terminal of the card reader unit 107 of the host device 101. And the chip card 103 can likewise be supplied with power by the power source 106 of the host device 101 by connecting the power terminal of the chip card 103 with the power terminal of the card reader unit 107 of the host device 101 within the add-on module 102. In the normal mode of operation of the host device 101, i.e. when no contactless transaction is executed using the add-on module 102, the chip card 103 preferably receives power via the card reader unit 107 of the host device 101.

In addition, the chip card 103 and preferably also the add-on module 102 can be supplied with power independent of the power supply from the host device 101. In one embodiment, this is achieved by means of a power supply unit 111 integrated into the chip card 103. Preferably, the power supply unit 111 is integrated Into the body of the chip card 103 together with the microcontroller 108 without enlarging the dimensions of the chip card 103, which are determined by the respective standard format. The supply unit 111 may be a rechargeable battery comprising one or more battery cells. The battery is small and thin enough to be integrated into the body of the chip card 103. For instance, the power supply unit 111 may be a foil battery, a RHISS battery (RHISS: rechargeable hydrogen ion solid state) or a thin-film battery. These types of batteries and their integration into chip cards 103 are, in general, known to person skilled in the art and will thus not be described in greater detail here.

The power supply unit 111 can supply power to the microcontroller 108 of the chip card 103 and, in addition, the power supply unit 111 may also provide the microcontroller 109 of the add-on module 102 with power via the power terminal Vcc of the chip card 103. By means of the power source 106 of the host device 101, the power supply unit 111 can be charged, when the host device 101 is turned on. The operation of the power supply unit 111 is controlled by a power management unit, which is preferably implemented as a program executed in the microcontroller 108 of the chip card 103. The power management unit is adapted to connect the power supply unit 111 to the power supply circuit of the chip card 103 such that the microcontroller 108 of the chip card 103 is supplied with power by the power supply unit 111. In particular, by means of the power management unit the power supply of the microcontroller 108 can be switched between a power supply via the power terminal Vcc of the chip card 103 and a power supply by the power supply unit 111. Moreover, the power management unit can connect the power supply unit 111 to the power terminal Vcc of the chip card 103 so that the add-on module 102 can be supplied with power by the power supply means 111.

By connecting the microcontroller 108 of the chip card 103 to the power supply unit 111, the microcontroller 108 can be supplied with power, when the power supply by the power source 106 of the host device 101 is disconnected. This is the case, when the host device 101 itself is turned off by the user or in case of exhaustion of the power source 106. Moreover, the host device 101 may disconnect the power supply via its card reader unit 107, when it is operated in an idle mode or in a sleep mode. Further on, in these situations, the microcontroller 109 of the add-on module 102 can be supplied with power by the power supply unit 111 of the chip card 103 by connecting the power supply unit 111 to the power terminal Vcc of the chip card 103, which is connected to the power supply circuit of the add-on module 102.

In a further embodiment, the add-on module 102 comprises an additional switching unit, which is adapted to disconnect the microcontroller 109 of the add-on module 102 and the chip card 103 from the power terminal of the card reader unit 107 of the host device 101. This allows for supplying the add-on module 102 and the chip card 103 with power by means of the power supply unit 111 of the chip card 103, when the host device 101 is turned on.

The power supply unit 111 can be charged by connecting it to the power terminal Vcc, while the chip card 103 is supplied with power by the power source 106 of the host device 101. Preferably, the power management unit of the chip card 103 disposes of a mechanism to determine the state-of-charge of the power supply unit 111. If it is judged that the capacity of the power supply unit 111 is below a predetermined threshold, charging is done, when it is determined that the chip card 103 is supplied with power by the host device 101 and, preferably when the microcontroller 108 of the chip card 103 operates at low load. In the latter case, the supply current of the microcontroller 108 is lower and it is ensured that the current supplied to the chip card 103 does not exceed a given threshold due to the charging current.

As an alternative to the power supply unit 111 integrated into the chip card 103, the add-on module 102 may be equipped with a power supply unit 112 in order to be able to supply power to the chip card 103 and to the add-on module 102 independent of the power supply by the host device 101. The power supply unit 112 may be a rechargeable battery, which may be arranged on the circuit board of the add-on module 102. Similar to the embodiment described before, the operation of the power supply unit 112 of the add-on module 102 is controlled by means of a power management unit, which may be implemented as a program executed in the microcontroller 109 of the add-on module 102. The power management unit is configured to connect the power supply unit 112 to the power terminal of the chip card 103, thereby allowing the microcontroller 108 of the chip card 103 to be supplied with power by the power supply unit 112. At the same time, the power supply of the chip card 103 by the host device 101 may be disconnected. The microcontroller 109 of the add-on module 102 may be exclusively supplied with power by the power supply unit 112. This can be done without loading the power supply unit 112 too much, since the microcontroller 109 only needs to be active, when a contactless transaction is executed. In the alternative, the microcontroller 109 may be connected to the power terminal of the card reader unit 107 of the host device 101 as well as to the power supply unit 112, and the power management activates the first or the second power connection.

The power supply unit 112 can be charged by connecting it to the power terminal of the card reader unit 107, while the host device 101 is turned on and supplies power to the power terminal of the card reader unit 107. Preferably, the power management unit of the add-on module 102 disposes of a mechanism to determine the state-of-charge of the power supply unit 112. If it is judged that the capacity of the power supply unit 112 is below a predetermined threshold, charging is done, when it is determined that a supply voltage is fed to the power terminal of the card reader unit 107. Preferably, charging is only done, when the microcontroller 108 of the chip card 103 operates at low load, i.e. when the supply current of the chip card 103 is below a predetermined threshold.

When a contactless transaction is to be executed with a terminal, the add-on module 102 has to be activated and a communication connection has to be established between the add-on module 102 and the chip card 103 allowing for exchanging data between the microcontroller 109 of the add-on module 102 and the respective application provided by the microcontroller 108 of the chip card 103.

Before a transaction is executed, the add-on module 102 or its microcontroller 109 is preferably turned off, such that the microcontroller 109 is not supplied with power, When a transaction is to be executed using the active communication mode or when the add-on module 102 is operated as the target in the passive communication mode, the add-on module 102 may be turned on, when it enters the RF field generated by the terminal. In this case, the RF field generated by the terminal inductively supplies power to the microcontroller 109 via the antenna 110, thereby activating the microcontroller 109. Further on, the microcontroller 109 of the add-on module 102 may also be capable of supplying power to the power terminal of the chip card 103 at least for a short period of time. As will described below, such a power pulse may be used to activate the microcontroller 108 of the chip card 103 when it is turned off.

After having been activated by the RF field, the microcontroller 109 is supplied with power by another power source, at least when it operates in the active communication mode. However, it is advantageous to supply the microcontroller 109 also with power by means of a further power source, when it is operated in the passive mode. This allows for executing transactions, when the RF field generated by the terminal is weaker. In particular, the strength of RF field decreases with the distance to the terminal so that an additional power supply of the microcontroller 109 to the power supply by the RF field allows for an increased range of the contactless communication.

In case the host device 101 is turned on and a supply voltage is fed to the power terminal of the card reader unit 107, the microcontroller 109 of the add-on module 102 may be supplied with power by the power source 106 of the host device 101 after being activated, or it may be supplied by the power supply unit 112 integrated into the add-on module 102, if the microcontroller 109 of the add-on module 102 is exclusively supplied with power in this way. The chip card 103 is preferably also supplied with power by the power source 106 of the host device. Thus, the normal mode of supplying power to the chip card 103 is maintained during the contactless transaction. After the transaction has been completed the microprocessor 109 of the add-on module may be deactivated again.

In a further embodiment, the add-on module 102 and the chip card 103 are disconnected from the power supply by the host device 101 and they are supplied with power by the power supply unit 111; 112 of the chip card 103 or the add-on module 102. If the chip card 103 is equipped with a power supply unit 111, the switching unit of the add-on module 102 informs the power management unit of the chip card 103 that a transaction is to be executed and disconnects the chip card 103 from the power terminal of the card reader unit 107 of the host device 101, Upon receipt of the information, the power management unit connects the power supply unit 111 to the microcontroller 108 of the chip card 103, and it connects the power supply unit 111 to the power terminal Vcc of the chip card 103 such that the microprocessor 108 of the add-on module 102 is also supplied with power by the power supply unit 111. In case the add-on module 102 disposes of a power supply unit 112, the power management unit of the add-on module 102 connects the power supply unit 112 to the power terminal of the chip card 103 so that the microcontroller 108 of the chip card 103 is supplied with power by the power supply unit 112 and the power management unit disconnects the chip card 103 from the power terminal of the card reader unit 107 of the host device 101. Moreover, it is ensured that the microcontroller 109 of the add-on module 102 is supplied with power by the power supply unit 112. Irrespective whether the power supply unit 111; 112 is integrated into the chip card 103 or the add-on module 102, the chip card 103 is again supplied with power by the host device 101 after the contactless transaction has been completed. The microcontroller 109 of the add-on module 102 is preferably deactivated after the contactless transaction has been completed.

By providing a power supply by means of the power supply unit 111; 112 of the chip card 103 or the add-on module 102 during a contactless transaction, it Is ensured that the transaction can be completed and the secure connection between the add-on module 102 and the chip card 103 can be maintained also if the power supply by the host device 101 is disconnected or interrupted during the transaction. Thus, it is prevented that a transaction cannot be completed due to exhaustion of the power source 106 of the host device 101 or when the host device 101 is turned off or when it is set to an idle or a sleep mode during a transaction. Moreover, security against tampering is improved, since the secure connection between the add-on module 102 and the chip card 103 cannot be interrupted by disconnecting the power supply of one device 102; 103,

When no supply voltage is fed to the power terminal of the card reader unit 107 of the host device 101, the add-on module 102 and the chip card 103 are supplied with power by the power supply unit 111; 112 of the chip card 103 or the add-on module 102 during a transaction. Before the transaction is executed, the microcontroller 108 of the chip card 103 and the microcontroller 109 of the add-on module 102 may be turned off.

In case the power supply unit 111 is integrated into the chip card 103, the microcontroller 109 of the add-on module 102 activates the microcontroller 108 of the chip card 103, when the add-on module 102 has entered the RF field generated by a terminal for contactless communication. For this purpose, a power pulse is supplied to the chip card 103 in order to activate the microcontroller 108 of the chip card 103. After the microcontroller 108 of the chip card 103 has been activated, the power management unit of the chip card 103 connects the power supply unit 111 to the power terminal of the chip card 103 to supply the microcontroller 109 of the add-on module 102 with power. Then, the contactless transaction is executed while the microcontrollers 108, 109 of the chip card 103 and the add-on module 102 are supplied with power by the power supply unit 111. After the contactless transaction has been completed, the microcontroller 109 of the add-on module 102 and the microcontroller 108 of the chip card 103 are deactivated again.

If the power supply unit 112 is integrated into the add-on module 102, the power management unit of the add-on module 102 connects the microcontroller 109 of the add-on module 102 to the power supply unit 112, when the add-on module 102 has entered the RF field generated by a terminal for contactless communication. In addition, the power management unit of the add-on module 102 preferably connects the power supply unit 112 to the power terminal of the chip card 103, and the microcontroller 108 of the chip card 103 is activated. While the contactless transaction is executed, the microcontrollers 108, 109 of the chip card 103 and the add-on module 102 are supplied with power by the power supply unit 112. After the contactless transaction has been completed, the microcontroller 109 of the add-on module 102 is deactivated again. The microcontroller 108 of the chip card 103 is likewise deactivated.

Alternative embodiments provide that one or both microcontrollers 108, 109 are not completely deactivated, when the power supply by the host device 101 is disconnected, but that they are operated in a sleep mode. The sleep mode is a low power mode, in which the respective microcontroller 108; 109 or both microcontrollers 108, 109 are supplied with power by the power supply 111, 112 of the chip card 103 or the add-on module 102. The sleep mode is preferably activated by the power management unit of the chip card 103 or the add-on module 102, when it is determined that the power supply from the host device 101 is disconnected. The activation of the sleep mode comprises connecting the respective microcontroller 108; 109 or both microcontrollers 108, 109 to the power supply unit 111; 112 and switching the operation mode of the respective microcontroller 108; 109 or both microcontrollers 108, 109 from an active mode into the sleep mode. When the add-on module 102 enters an external RF field of a terminal for contactless communication, a microcontroller 108; 109 which is operated in sleep mode is switched into an active operation mode. In case of the microcontroller 109 of the add-on module 102, this may be done in response to receiving the external RF signal. In case of the microcontroller 108 of the chip card 103, this may be done by an activation signal generated in the microcontroller 109 of the add-on module 102 when an external RF signal is received. After the contactless transaction has been completed, a microcontroller 108; 109 that has been operated in the sleep mode before is put again in to the sleep mode. The operation in the sleep mode has the advantage that the respective microcontroller 108; 109 can be switched faster into an active operation mode.

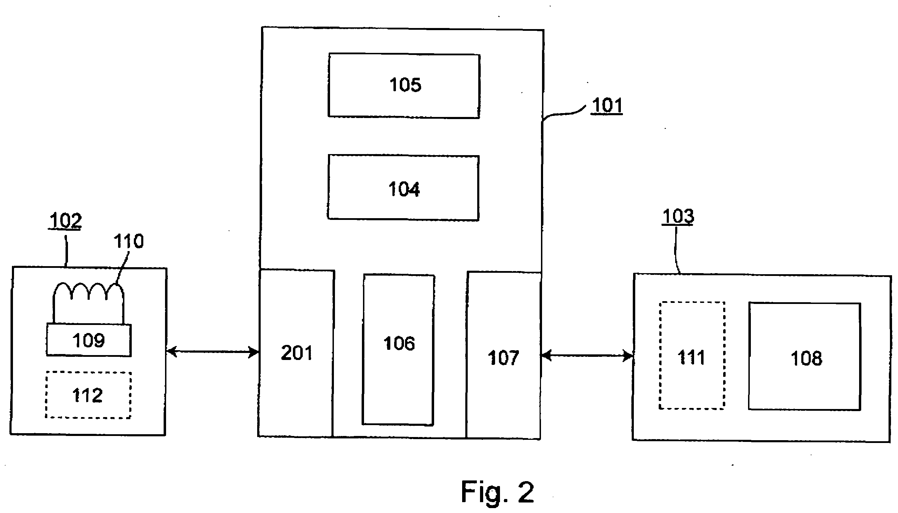

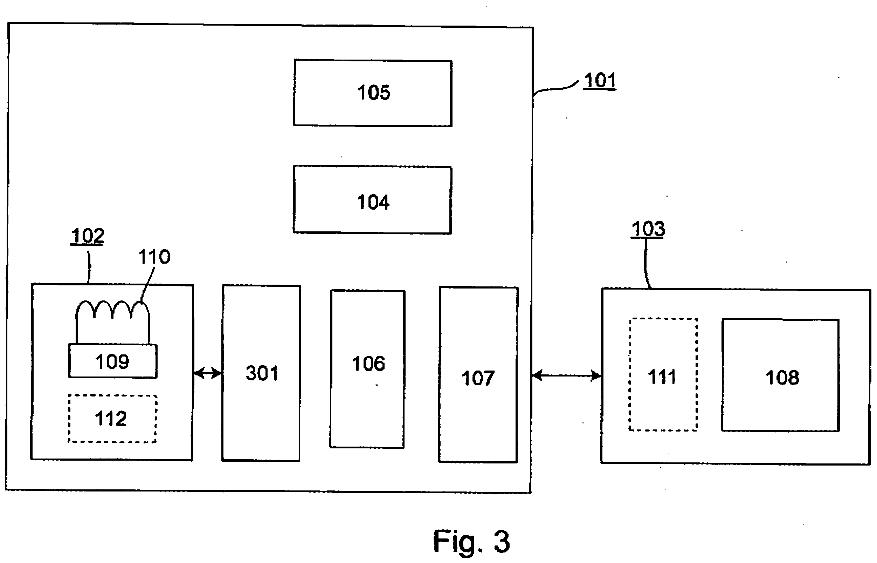

Further embodiments, which are schematically depicted in figure 2, differ from the embodiments described before in that the add-on module 102 is not connected between the host device 101 and the chip card 103 but to an external interface 201 of the host device 101. In an alternative to the embodiment shown in figure 3, the add-on module 102 is integrated into the host device 101 as schematically depicted in figure 3. Here, the add-on module 102 is connected to an internal interface 301 of the host device 101 instead of the external interface 201.

Via the external interface 201 or the internal interface 301, the add-on module 102 is coupled to the chip card 103 inserted into the card reader unit 107 of the host device 101. When the host device 101 is turned on, the add-on module 102 and the chip card 103 can be supplied with power by the power source 106 of the host device. Here, the chip card 103 is supplied with power via the card reader unit 107 as described before, and the external interface 201 may have a direct power connection to the power source 106 in order to supply the add-on module 103 with power. As in the embodiments described before, either the chip card 103 or the add-on module 102 comprise an additional power supply unit 111; 112 for supplying the respective device 102;103 with power. Further on, the connection between the add-on module 102 and chip card 103 via the external interface 201 or the internal interface 301 allows supplying power from one device to the other, when the power supply by the power source 106 of the host device 101 is not available. In addition, it may be possible to disconnect both devices from the power source 106, when a contactless transaction is executed.

The systems depicted in figures 2 and 3 in their aforementioned embodiments are operated in an analogue way to the system described before with reference to figure 1. In particular, the add-on module 102 and the chip card 103 are supplied with power by the power supply unit 111; 112 of the chip card 103 or the add-on module 102 during a contactless transaction, when the power supply by the host device 101 is disconnected. And, as in the system described before, both devices may also be disconnected from the power source 106 of the host device 101 during a contactless transaction, when the host device is turned on. The power supply of the add-on module 102 and the chip card 103 as well as the charging of the power supply unit 111; 112 of the chip card 103 or the add-on module 102 is controlled by one or more power management units as described in detail in connection with the embodiment depicted in figure 1. However, the power connection between the devices 102, 103 does may not comprise the power terminal of the chip card 103 connected to the card reader unit 107 of the host device 101, but another power connection between the devices 102,103.

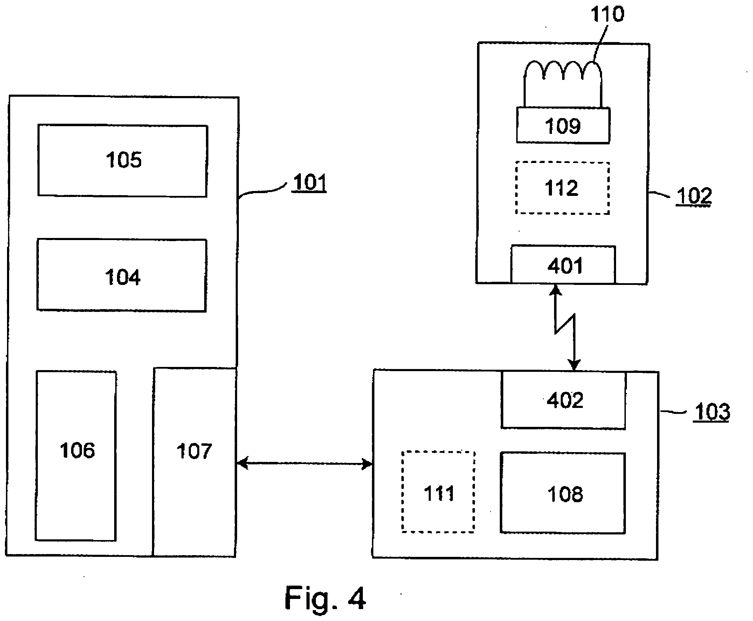

Moreover, further embodiments of the invention are schematically depicted in figure 4. In these embodiments, a wireless connection is established between the chip card 103 and the add-on module 102. For this purpose the add-on module 102 comprises a wireless interface 401, and the chip card 103 comprises a corresponding wireless interface 402. The chip card 103 is again inserted into the card reader unit 107 of the host device 101 and can be supplied with power by the power source 106 of the host device 101.

Further on, the chip card 103 may be provided with a power supply unit 111 as described before, while the add-on module 102 does not dispose of a power supply. In this embodiment, the chip card 103 is supplied with power by the power source 106 of the host device 101, if the host device 101 supplies power to the chip card 103, or it is supplied with power by the power supply unit 111 during a contactless transaction. Power supply by the power supply unit 111 is provided, when the power supply by the host device 101 is disconnected and, as described before, it may also be generally provided, when a contactless transaction is executed. For communicating with the add-on module 102, the chip card 103 generates an RF field by means of the wireless interface 402, which affects the wireless interface 401 of the add-on module 102. The microcontroller 109 of the add-on module 102 is supplied with power inductively by means of the RF field via the wireless interface 401. However, in order to activate the microcontroller 108 of the chip card 103, the add-on module 102 may actively generate an RF field using the wireless interface 401 and send an activation signal to the chip card 103, which is received in the wireless interface 402 of the chip card 103. In order to send the activation signal, the add-on module is supplied with power by the external RF field generated by the transaction terminal.

Alternatively, the add-on module 102 may be provided with a power supply unit 112, while the add-on module 102 does not dispose of a power supply. In this embodiment, the chip card 103 may be again supplied with power by the power source 106 of the host device 101, if the host device 101 supplies power to the chip card 103. Here, the add-on module 102 and the chip card 103 each can generate an RF field using the respective wireless interface 401, 402. Thus, the add-on module 102 and the chip card 103 can communicate either in an active communication mode or in a passive communication mode. When power supply of the chip card 103 by the host device 101 is disconnected or when it is generally provided that the chip card 103 is supplied with power independent of the power source 106 of the host device 101 during a contactless transaction, the chip card 103 is provided with power inductively via the wireless interface 402 by means of an RF field generated in the add-on module 102. Here, the communication between the add-on module 102 and the chip card 103 uses a passive communication mode and the chip card 103 acts passively as the target.

The system depicted in figure 3 in its aforementioned embodiments is operated in an analogue way to the system described before with reference to figure 1. In particular, the add-on module 102 and the chip card 103 are supplied with power by the power supply unit 111; 112 of the chip card 103 or the add-on module 102 during a contactless transaction, when the power supply by the host device 101 is disconnected. And, as in the system described before, the chip card 103 may also be disconnected from the power source 106 of the host device 101 during a contactless transaction, when the host device 101 is turned on. The power supply of the add-on module 102 and the chip card 103 as well as the charging of the power supply unit 111; 112 of the chip card 103 or the add-on module 102 is controlled by a power management unit as described in detail in connection with the system depicted in figure 1.

In the embodiments of the invention described before, either the chip card 103 or the add-on module 102 disposes of a power supply unit 111; 112. Alternatively, each device comprises a power supply unit 111; 112 supplying power the device during a contactless transaction. In this case, the chip card 103 is supplied with power by the power supply unit 111 during a contactless transaction. The add-on module 102 is supplied with power by its power supply unit 112 during contactless transactions. Since both devices 102, 103 dispose of an own power supply, each device comprises a power management unit for controlling the power supply of the microcontroller 108; 109 of the respective device 102; 103 and the charging of the respective power supply unit 111; 112, if the device 102; 103 can be supplied with power by the power source 106 of the host device 101. If the add-on module 102 and the chip card 103 communicate wirelessly with each other, they can communicate either in an active communication mode or in a passive communication mode, if both devices dispose of a power supply unit 111; 112.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A system comprising a chip card (103), wherein the chip card is SIM-card connected to a host device (101) via a first interface (107), wherein the host device (101) is a mobile communication device, and an add-on module (102) which can be coupled to the chip card (103) to execute a transaction, the add-on module (102) comprising a communication means (109, 110) for contactless communication with a terminal, the chip card (103) including an element providing information used for executing transactions with the terminal, wherein the chip card (103) can be supplied with power by a first power supply means (106) of the host device (101), the system further comprises at least one second power supply means (111; 112) and the chip card (103) and the add-on module (102) can be supplied with power by the second power supply means (111; 112), when a transaction is executed such that the transaction can be executed by using the information for executing transactions with the terminal, the second power supply means (111; 112) being included in the chip card (103) or in the add-on module (102).

2. The system according to one of the preceding claims, wherein the second power supply means (111; 112) comprises a rechargeable battery and wherein the battery can be charged by the first power supply means (106).

3. The system according to one of the preceding claims, wherein, in a first operation mode, the chip card (103) is supplied with power by the first power supply means (106) and, in a second operation mode, the chip card (103) is supplied with power by the second power supply means (111; 112).

4. The system according to claim 3, wherein the second operation mode is used, if a power connection between the first power supply means (106) and the chip card (103) and/or the add-on module (102) is disconnected when a transaction is executed.

5. The system according to claim 3, wherein the second operation mode is used, when a transaction is executed, while the first power supply means (106) is able to supply power to the chip card (103).

6. The system according to one of the preceding claims, wherein the add-on module (102) is connected between the host device (101) and the chip card (103).

7. The system according to one of the claims 1 to 5, wherein the add-on module (102) is connected to the host device (101) via a second interface (201; 301) and/or is integrated into the host device (101).

8. The system according to one of the claims 1 to 5, wherein the add-on module (102) and the chip card (103) can be coupled wirelessly.

## Patentansprüche

1. System aufweisend eine Chipkarte (103), wobei die Chipkarte eine SIM-Karte ist, die mit einer Host-Vorrichtung (101) über eine erste Schnittstelle (107) verbunden ist, wobei die Host-Vorrichtung (101) eine Mobilkommunikationsvorrichtung ist, und ein Zusatzmodul (102), das an die Chipkarte (103) gekoppelt werden kann, um eine Transaktion auszuführen, wobei das Zusatzmodul (102) eine Kommunikationseinrichtung (109, 110) zur kontaktlosen Kommunikation mit einem Endgerät aufweist, wobei die Chipkarte (103) ein Element umfasst, das Informationen bereitstellt, die zur Ausführung von Transaktionen mit dem Endgerät verwendet werden, wobei die Chipkarte (103) durch eine erste Stromversorgungseinrichtung (106) der Host-Vorrichtung (101) mit Strom versorgt werden kann, das System ferner zumindest eine zweite Stromversorgungseinrichtung (111; 112) aufweist und die Chipkarte (103) und das Zusatzmodul (102) durch die zweite Stromversorgungseinrichtung (111; 112) mit Strom versorgt werden können, wenn eine Transaktion ausgeführt wird, so dass die Transaktion ausgeführt werden kann, indem die Informationen zur Ausführung von Transaktionen mit dem Endgerät verwendet werden, wobei die zweite Stromversorgungseinrichtung (111; 112) in der Chipkarte (103) oder in dem Zusatzmodul (102) enthalten ist.

2. System nach einem der vorstehenden Ansprüche, wobei die zweite Stromversorgungseinrichtung (111; 112) eine wiederaufladbare Batterie aufweist und wobei die Batterie durch die erste Stromversorgungseinrichtung (106) aufgeladen werden kann.

3. System nach einem der vorstehenden Ansprüche, wobei die Chipkarte (103) in einem ersten Betriebsmodus durch die erste Stromversorgungseinrichtung (106) mit Strom versorgt wird, und die Chipkarte (103) in einem zweiten Betriebsmodus durch die zweite Stromversorgungseinrichtung (111; 112) mit Strom versorgt wird.

4. System nach Anspruch 3, wobei der zweite Betriebsmodus verwendet wird, falls eine Stromverbindung zwischen der ersten Stromversorgungseinrichtung (106) und der Chipkarte (103) und/oder dem Zusatzmodul (102) unterbrochen wird, wenn eine Transaktion ausgeführt wird.

5. System nach Anspruch 3, wobei der zweite Betriebsmodus verwendet wird, wenn eine Transaktion ausgeführt wird, während die erste Stromversorgungseinrichtung (106) in der Lage ist, Strom an die Chipkarte (103) zuzuführen.

6. System nach einem der vorstehenden Ansprüche, wobei das Zusatzmodul (102) zwischen der Hostvorrichtung (101) und der Chipkarte (103) angeschlossen ist.

7. System nach einem der Ansprüche 1 bis 5, wobei das Zusatzmodul (102) mit der Hostvorrichtung (101) über eine zweite Schnittstelle (201; 301) verbunden ist und/oder in die Hostvorrichtung (101) integriert ist.

8. System nach einem der Ansprüche 1 bis 5, wobei das Zusatzmodul (102) und die Chipkarte (103) drahtlos gekoppelt werden können.

## Revendications

1. Système comprenant une carte à puce (103), dans lequel la carte à puce est une carte SIM connectée à un dispositif hôte (101) via une première interface (107) ; dans lequel le dispositif hôte (101) est un dispositif de télécommunications mobiles, et un module d'extension (102), lequel peut être couplé à la carte à puce (103) pour exécuter une transaction, le module d'extension (102) comprenant un moyen de télécommunications (109, 110) pour une communication sans contact avec un terminal, la carte à puce (103) incluant un élément fournissant des informations utilisées pour l'exécution de transactions avec le terminal ; dans lequel la carte à puce (103) peut être alimentée en énergie par un premier moyen d'alimentation électrique (106) du dispositif hôte (101), le système comprenant en outre au moins un second moyen d'alimentation électrique (111; 112), et la carte à puce (103) et le module d'extension (102) peuvent être alimentés en énergie par le second moyen d'alimentation électrique (111; 112), lorsqu'une transaction est exécutée de telle sorte que la transaction peut être exécutée à l'aide des informations pour l'exécution de transactions avec le terminal, le second moyen d'alimentation électrique (111; 112) étant inclus dans la carte à puce (103) ou dans le module d'extension (102).

2. Système selon l'une quelconque des revendications précédentes, dans lequel le second moyen d'alimentation électrique (111; 112) comprend une batterie rechargeable, et dans lequel la batterie peut être chargée par le premier moyen d'alimentation électrique (106).

3. Système selon l'une quelconque des revendications précédentes, dans lequel dans un premier mode de fonctionnement, la carte à puce (103) est alimentée en énergie par le premier moyen d'alimentation électrique (106), et dans un second mode de fonctionnement, la carte à puce (103) est alimentée en énergie par le second moyen d'alimentation électrique (111; 112).

4. Système selon la revendication 3, dans lequel le second mode de fonctionnement est utilisé, si une connexion d'alimentation entre le premier moyen d'alimentation électrique (106) et la carte à puce (103) et/ou le module d'extension (102) est déconnectée lorsqu'une transaction est exécutée.

5. Système selon la revendication 3, dans lequel le second mode de fonctionnement est utilisé, lorsqu'une transaction est exécutée, tandis que le premier moyen d'alimentation électrique (106) est en mesure d'alimenter en énergie la carte à puce (103).

6. Système selon l'une quelconque des revendications précédentes, dans lequel le module d'extension (102) est connecté entre le dispositif hôte (101) et la carte puce (103).

7. Système selon l'une quelconque des revendications 1 à 5, dans lequel le module d'extension (102) est connecté au dispositif hôte (101) via une seconde interface (201; 301) et/ou est intégré dans le dispositif hôte (101).

8. Système selon l'une quelconque des revendications 1 à 5, dans lequel le module d'extension (102) et la carte puce (103) peuvent être couplés sans fil.
